(19) Europäisches Patentamt / European Patent Office / Office européen des brevets

(11) **EP 4 501 632 A1**

(12) **EUROPEAN PATENT APPLICATION**
published in accordance with Art. 153(4) EPC

(43) Date of publication:
**05.02.2025 Bulletin 2025/06**

(21) Application number: **23781060.1**

(22) Date of filing: **31.03.2023**

(51) International Patent Classification (IPC):
*B32B 27/30* [(2006.01)]   *B32B 3/30* [(2006.01)]
*B32B 27/00* [(2006.01)]   *E04F 13/07* [(2006.01)]
*E04F 13/08* [(2006.01)]

(52) Cooperative Patent Classification (CPC):
**B32B 3/30; B32B 27/00; B32B 27/30; E04F 13/07; E04F 13/08**

(86) International application number:
**PCT/JP2023/013562**

(87) International publication number:
**WO 2023/191052 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2022   JP 2022060429**

(71) Applicant: **Toppan Holdings Inc.**
**Tokyo 110-0016 (JP)**

(72) Inventors:
- **AKUTSU Erika**
  **Tokyo 110-0016 (JP)**
- **NISHIKAWA Yohei**
  **Tokyo 110-0016 (JP)**
- **SHIMIZU Kosuke**
  **Tokyo 110-0016 (JP)**

(74) Representative: **TBK**
**Bavariaring 4-6**
**80336 München (DE)**

(54) **DECORATIVE SHEET AND METHOD FOR MANUFACTURING DECORATIVE SHEET**

(57)   There is provided a decorative sheet which has excellent designability with a gloss level of 15 or less and which has fingerprint resistance, high durability (particularly, scratch resistance and contamination resistance), and processability (easily laminated to a substrate material and hardly broken), and a method of producing the decorative sheet. A decorative sheet (1) according to the present embodiment includes a primary film layer (2) and a surface protective layer (5), in which the surface protective layer (5) has a gloss level of 15 or less; the surface protective layer (5) has on its surface a ridged portion projecting in a ridged pattern to form an uneven shape; the surface protective layer (5) has a Martens hardness of 20 N/mm$^2$ or greater and 200 N/mm$^2$ or less; the surface protective layer (5) contains as a main material an ionizing radiation curable resin; the ionizing radiation curable resin contains as a main component a tetrafunctional acrylic resin containing a repeating structure; the number of repetitions of the repeating structure is 12 or more; and RSm/Ra of the uneven shape of the surface protective layer (5) is in a range of 10 or more and 300 or less.

FIG.1

**Description**

[Technical Field]

The present invention relates to decorative sheets used for surface decoration of interiors and exteriors of buildings, fittings, furniture, construction materials, floor materials, and the like, and methods for producing the decorative sheets.

[Background Art]

Decorative sheets are commonly and widely used in the aforementioned buildings as decorative boards, in which the decorative sheets are laminated to the surface of wood, wooden boards, metal plates, fireproof boards, paper substrates, resin substrates or other materials via an adhesive or the like in order to provide surface design properties and durability.

To provide design properties, designs are selected depending on requirements and applications, ranging from wood-grain or stone-grain patterns formed by various printing methods to plain surfaces without a pattern. Further, surface gloss is also an important aspect of design properties, and glosses are selected depending on requirements and applications, ranging from a high, mirror-like gloss to low gloss causing no reflection.

As described above, along with design properties, durability is an important feature of decorative sheets. Durability is determined by an overall evaluation of scratch resistance, contamination resistance, and whether they are maintained over a long period of time, and although requirements vary depending on the environment and conditions in which decorative sheets are used, highly durable decorative sheets are always in demand.

Durability is typically imparted by forming a surface protective layer on the outermost surface of the decorative sheets. In order to adjust the above-mentioned gloss, in particular, to achieve low gloss, a matting agent (matting additive) is typically added to the surface protective layer.

In addition, the decorative sheets are typically subjected to processing such as cutting and bending to form decorative boards or decorative materials, and preferably have processability to withstand these processes.

PTL 1 discloses an example of the decorative sheets obtained in consideration of design properties (low gloss), scratch resistance and contamination resistance.

[Citation List]

[Patent Literature]

PTL 1: JP 2019-119138 A

[Summary of the Invention]

[Technical Problem]

In recent years, due to expansion of applications for decorative boards using decorative sheets and increasing quality orientation of consumers, decorative sheets are required to have a gloss level of 15 or less and achieve fingerprint resistance, scratch resistance, contamination resistance and bending processability.

In response to the above requirements, gloss adjustment may be achieved by adding a matting agent to roughen the surface, but adding a large amount of matting agent causes the following disadvantages. (1) Fingerprint stains are not easily removed, resulting in lower fingerprint resistance. (2) The matting agent becomes detached during a scratch resistance test, resulting in lower scratch resistance. (3) Stains are not easily removed, resulting in lower contamination resistance. (4) Whitening occurs due to the matting agent during bending, resulting in lower bending processability. Especially regarding processability, when the crosslinking density of a resin used in the surface protective layer is increased to improve scratch resistance, (5) the sheet curls significantly due to curing shrinkage making it difficult to laminate onto substrate materials. Further, (6) since the surface protective layer is excessively hard, the decorative sheet tends to be broken.

For solving the above-described problems, an object of the present invention is to provide a decorative sheet which has excellent designability with low gloss and which has fingerprint resistance, high durability (particularly, scratch resistance and contamination resistance), and processability (easily laminated to a substrate material and hardly broken), and a method of producing the decorative sheet.

[Solution to Problem]

As a result of repeated experiments to optimize the uneven shape of the surface protective layer and search for structural elements required for materials used for the surface protective layer, the inventors of the present invention have found that it is possible to provide a decorative sheet having a gloss level of 15 or less and exhibiting fingerprint resistance, high durability (particularly, scratch resistance and contamination resistance), and processability (easily laminated onto substrate materials and hardly broken).

For solving the problem, a decorative sheet according to an aspect of the present invention includes a primary film layer; and a surface protective layer disposed on one surface of the primary film layer, wherein the surface protective layer has a gloss level of 15 or less; the surface protective layer has on its surface a ridged portion projecting in a ridged pattern to form an uneven shape; the surface protective layer includes as a main material an ionizing radiation curable resin; the ionizing radiation curable resin contains, as a main component, a tetrafunctional acrylic resin containing a repeating structure; the number of repetitions of the repeating structure is 12 or more; the surface protective layer has a Martens hardness in a range of 20 N/mm$^2$ or greater and 200 N/mm$^2$ or less; and RSm/Ra of the uneven shape of the surface protective layer is in a range of 10 or greater and 300 or less.

[Advantageous Effects of the Invention]

According to an aspect of the present invention, there can be provided a decorative sheet which has a gloss level of 15 or less and strikes a balance among fingerprint resistance, scratch resistance, contamination resistance, and processability.

[Brief Description of the Drawings]

Fig. 1 is a schematic cross-sectional view illustrating a configuration of a decorative sheet according to an embodiment of the present invention.

Fig. 2 is a schematic cross-sectional view illustrating a configuration of a surface protective layer of a decorative sheet according to an embodiment of the present invention.

Fig. 3 is a two-dimensional image showing a configuration of a surface of a surface protective layer of a decorative sheet according an embodiment of the present invention.

Fig. 4 is a schematic cross-sectional view illustrating a cross-sectional shape of a ridged portion according to an embodiment of the present invention.

Fig. 5 is a schematic view for explaining a time change of an irradiation light amount of each irradiation light in a production step of a decorative sheet according to an embodiment of the present invention.

Fig. 6 is a schematic cross-sectional view for explaining a measurement method of a curling properties test.

[Description of Embodiments]

A configuration of a decorative sheet according to an embodiment of the present invention will be described below with reference to the drawings.

The drawings are schematic, and a relationship between thickness and planar dimensions, ratios of thicknesses of layers, and the like differ from actual values. Moreover, the embodiments illustrated below are examples of the configuration for embodying the technical idea of the present invention, and the technical idea of the present invention can be variously modified within the technical scope defined in the claims.

(Configuration)

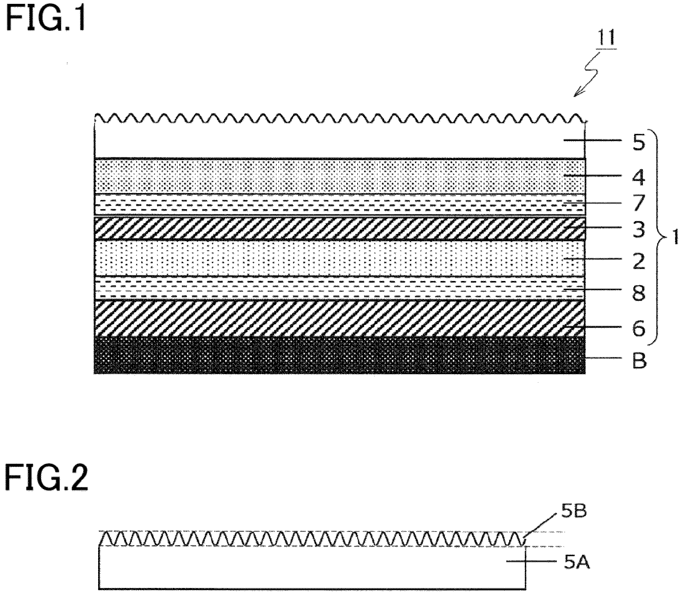

A decorative sheet 1 of the present embodiment is, as shown in Fig. 1, configured by a pattern layer 3, an adhesive layer 7 (a heat-sensitive adhesive layer, an anchor coat layer, a dry lamination adhesive layer), a transparent resin layer 4, and a surface protective layer 5 which are laminated in this order on a front surface side that is one side of a primary film layer (substrate layer) 2. Further, a concealing layer 8 and a primer layer 6 are provided on a back surface side that is the other surface of the primary film layer 2. The pattern layer 3, the adhesive layer 7, the transparent resin layer 4, the concealing layer 8, and the primer layer 6 may be omitted.

Furthermore, the decorative sheet 1 of the present embodiment is, as shown in Fig. 1, bonded to a substrate B to constitute a decorative material 11. The substrate B is not particularly limited but is constituted by, for example, wood boards, inorganic boards, a metal plate, or a composite plate including a plurality of materials.

<Primary film layer 2>

A usable example of the primary film layer 2 is one optionally selected from paper, a synthetic resin or a foam of a synthetic resin, rubber, nonwoven fabric, synthetic paper, metal foil, and the like. Examples of the paper include tissue paper, titanium paper, and resin-impregnated paper. Examples of the synthetic resin include polyethylene, polypropylene, polybutylene, polystyrene, polycarbonate, polyester, polyamide, an ethylene-vinyl acetate copolymer, polyvinyl alcohol, and acryl. Examples of the rubber include ethylene-propylene copolymer rubber, ethylene-propylene-diene copolymer rubber, styrene-butadiene copolymer rubber, styreneisoprene-styrene block copolymer rubber, styrene-butadiene-styrene block copolymer rubber, and polyurethane. As the nonwoven fabric, organic or inorganic nonwoven fabric can be used. Examples of the metal foil include aluminum, iron, gold, and silver.

When an olefin-based resin is used as the primary film layer 2, the primer layer 6 is preferably provided between the primary film layer 2 and the substrate material B, because the surface of the primary film layer 2 is often inert. In addition, in order to improve adhesiveness between the primary film layer 2 made of an olefin-based material and the substrate material B, the primary film layer 2 may be subjected to a surface modification treatment such as a corona treatment, a plasma treatment, an ozone treatment, an electron beam treatment, an ultraviolet treatment, or a bichromate treatment.

The primer layer 6 may be made of the same material as that of the pattern layer 3, which will be described later. Considering that the decorative sheet 1 is wound into a roll, the primer layer 6, which is disposed on the rear surface of the decorative sheet 1, may contain an inorganic filler in order to prevent blocking and enhance adhesion to the adhesive. Examples of the inorganic filler include silica, alumina, magnesia, titanium oxide, and barium sulfate.

The layer thickness of the primary film layer 2 is preferably in a range of 20 μm or greater and 250 μm or less, in consideration of printing workability and cost.

<Pattern layer 3>

The pattern layer 3 is a layer obtained by printing a pattern on the primary film layer 2 with ink. A binder for ink can be appropriately selected from, for example, nitrocellulose, cellulose, vinyl chloride-vinyl acetate copolymers, polyvinyl butyral, polyurethane, acrylic, polyester and modified products thereof. The binder may be any aqueous, solvent or emulsion type, and may be a one-part type or a two-part type which uses a curing agent. Further, curable inks may be used and cured by irradiation with ultraviolet light, electron beams, or the like. Among others, the most typical method is the use of urethane-based inks that are cured using isocyanate. In addition to the binder, colorants such as pigments and dyes, extender pigments, solvents and various additives used in general inks may be added to the pattern layer 3. Examples of highly versatile pigments include condensed azo pigments, insoluble azo pigments, quinacridones, isoindolines, anthraquinones, imidazolones, cobalt, phthalocyanines, carbon, titanium oxide, iron oxide and pearl pigments such as mica.

Besides the application of inks, vapor deposition or sputtering of various metals can be performed to apply a design to the pattern layer 3. In particular, it is preferred that a photostabilizer is added to the above inks in order to suppress deterioration of the decorative sheet 1 itself due to photodegradation of ink and extend the life of the decorative sheet 1.

<Adhesive layer 7>

The adhesive layer 7 is a layer also called a heat-sensitive adhesive layer, an anchor coat layer or a dry lamination adhesive layer.

The resin materials used for the adhesive layer 7 are not particularly limited, and can be appropriately selected from, for example, acrylic, polyester-based, polyurethane-based and epoxy-based resin materials. Examples of the resin materials of the adhesive layer 7 can further include ethylene-vinyl acetate copolymer resin-based adhesives. A method of applying the adhesive layer 7 can be appropriately selected depending on the viscosity of the adhesive, and the like, and gravure coating is typically used. After being applied to the upper surface of the pattern layer 3 by gravure coating, the adhesive layer 7 is laminated to the transparent resin layer 4. The adhesive layer 7 may be omitted when the adhesion strength between the transparent resin layer 4 and the pattern layer 3 is sufficient.

<Transparent resin layer 4>

A resin material of the transparent resin layer 4 is preferably an olefin-based resin. Examples of the olefin-based resin include polypropylene, polyethylene and polybutene, as well as homopolymers of α-olefins and copolymers of two or more α-olefins (e.g., propylene, 1-butene, 1-pentene, 1-hexene, 1-heptene, 1-octene, 1-nonene, 1-decene, 1-undecene, 1-dodecene, tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-pentene, 4-ethyl-1-hexene, 3-ethyl-1-hexene, 9-methyl-1-decene, 11-methyl-1-dodecene, and 12-ethyl-1-tetradecene), and copolymers of ethylene or an α-olefin with another monomer, such as ethylene-vinyl acetate copolymer, ethylene-vinyl alcohol copolymer, ethylene-methyl methacrylate copolymer, ethylene-ethyl methacrylate copolymer, ethylene-butyl methacrylate copolymer, ethylene-methyl acrylate copolymer, ethylene-ethyl acrylate copolymer and ethylene-butyl acrylate copolymer.

In order to improve surface strength of the decorative sheet 1, highly crystalline polypropylene is preferably used as the resin of the transparent resin layer 4. In necessary, the transparent resin layer 4 may contain various additives such as thermal stabilizer, photostabilizer, anti-blocking agent, catalyst scavenger, colorant, light scattering agent and matting agent. The thermal stabilizer is typically added in any combination between phenol-based, sulfur-based, phosphorus-based and hydrazine-based thermal stabilizers, and the photostabilizer is typically added in any combination between hindered amine-based photostabilizers.

<Surface protective layer 5>

The surface protective layer 5 includes a core portion 5A and a ridged portion 5B projecting in a ridged pattern from one surface of the core portion 5A. Accordingly, an uneven shape is formed on the surface of the surface protective layer 5.

In the decorative sheet 1 according to the present embodiment, the "ridged pattern" refers to a pattern of narrow and long projections that linearly continue in plan view. The ridged portion 5B may be curved or linear in plan view, but is preferably curved from the viewpoint of fingerprint resistance on the surface of the decorative sheet 1. In the present disclosure, the ridged portion 5B may refer to, for example, a portion from the bottom to the top of the uneven shape formed on the surface of the surface protective layer 5, and the core portion 5A refers to a portion of the surface protective layer 5 excluding the ridged portion 5B.

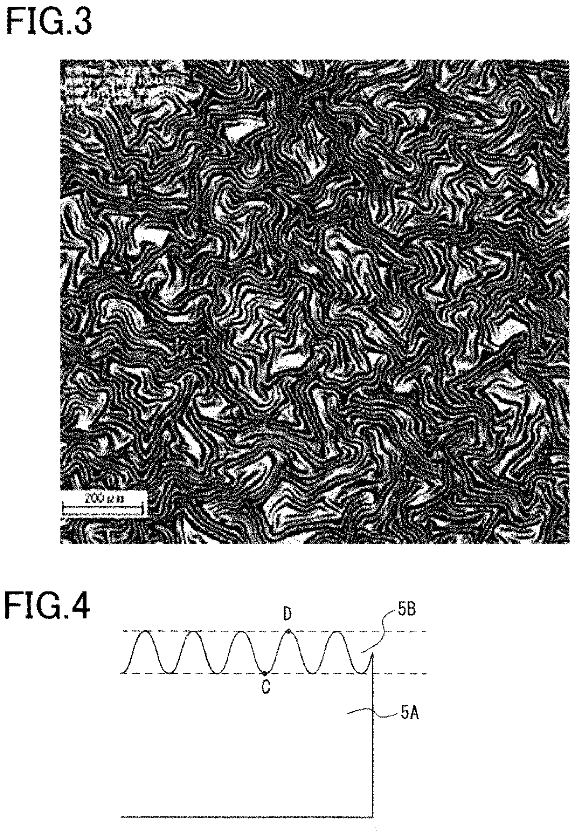

Fig. 2 is a cross-sectional view schematically illustrating a cross-section (a cross-section in the thickness direction of the surface protective layer 5) of the ridged portion 5B in the surface protective layer 5, and Fig. 3 is a two-dimensional image showing a configuration of the surface of the surface protective layer 5. Fig. 3 is a two-dimensional image obtained using a laser microscope (OLS-4000 manufactured by Olympus Corporation).

As shown in the two-dimensional image of Fig. 3, the ridged portion 5B is in the shape of narrow and long projections that linearly continue in plan view. As described later, the ridged portion 5B is formed by irradiating the surface of an ionizing radiation-curable resin with light having a certain wavelength to shrink the surface of the ionizing radiation-curable resin.

The shape of the ridged portion 5B can be expressed by a ratio RSm/Ra of the surface roughness index RSm (μm) in the lateral direction (the planar direction of the surface protective layer 5, or the horizontal direction in Fig. 2) to the surface roughness index Ra (μm) in the vertical direction (the depth direction of the ridged portion 5B, the thickness direction of the surface protective layer 5, or the vertical direction in Fig. 2), and RSm/Ra is 10 or greater and 300 or less. More preferably, RSm/Ra is 50 or greater and 300 or less. When RSm/Ra is less than 10, the shape of the ridged portion 5B is so fine that stains cannot easily be wiped off, resulting in lower stain resistance. When RSm/Ra is greater than 300, gaps between the ridges are so wide that low gloss cannot be achieved.

Still more preferably, RSm/Ra is 100 or greater and 300 or less. When RSm/Ra is within this numerical range, the gaps between the ridges have an appropriate width, improving the affinity to water or detergent (water containing a surfactant or an alcohol). Therefore, in the decorative sheet having RSm/Ra within this numerical range, stains can be easily wiped off with water or a detergent even if the surface of the decorative sheet is stained.

Most preferably, RSm/Ra is 100 or greater and 250 or less. When RSm/Ra is within this numerical range, commonly commercially available washing sponges easily penetrate between the ridges, and stains can be easily wiped off using a commonly commercially available washing sponge even if the surface of the decorative sheet is stained.

Further, RSm (μm) may be 50 or greater and 400 or less, and preferably 80 or greater and 300 or less. When RSm (μm) is within this numerical range, the gaps between the ridges have an appropriate width, improving the affinity to water or detergent (water containing a surfactant or an alcohol). Therefore, in the decorative sheet having RSm (μm) within this numerical range, stains can be easily wiped off with water or a detergent even if the surface of the decorative sheet is stained.

Further, Ra (μm) may be 0.3 or greater and 10 or less and is preferably 0.5 or greater and 10 or less and more preferably 0.8 or greater and 5 or less. When Ra (μm) is within this numerical range, commonly commercially available washing sponges easily penetrate between the ridges, and stains can be easily wiped off using a commonly commercially available washing sponge even if the surface of the decorative sheet is stained.

As described herein, Ra and RSm are measured values when measured using a line roughness meter (complying with JIS B 0601).

The cross-sectional shape of the ridged portion 5B in the thickness direction of the surface protective layer 5 may be sinusoidal wave shape.

As described herein, the "sinusoidal wave shape" refers to, as shown in Fig. 4, a shape in which a line extending from the lowest position C of the ridged portion 5B to the highest position (top) D can be expressed by a sinusoidal wave.

In the following description, a mechanism of forming the ridged portion 5B will be described.

When irradiated with first irradiation light, i.e., light having a wavelength of 200 nm or less, an acrylate can be self-excited. Accordingly, irradiation of an acrylate with light at 200 nm or less enables the acrylate to be crosslinked. Light at 200 nm or less reaches a depth of around several tens to hundreds nanometers in the acrylate. Therefore, crosslinking occurs only on the surface while the underlying part has fluidity, thus producing fine wavy uneven shape like folding creases.

The surface protective layer 5 thus formed has no interface between the core portion 5A and the ridged portion 5B, and the core portion 5A and the ridged portion 5B are integrally and continuously formed.

Light at 200 nm or less is absorbed by oxygen in the air and greatly attenuated. Therefore, when acrylate is treated, the reaction atmosphere needs to be controlled by introducing nitrogen gas. The concentration of residual oxygen in the reaction atmosphere is preferably controlled to 2,000 ppm or less. More preferably, the concentration of residual oxygen in the reaction atmosphere is 1,000 ppm or less.

In order to produce an uneven shape using the first irradiation light, which is light having a wavelength of 200 nm or less, the first irradiation light preferably has an integrated light intensity of 0.5 mJ/cm$^2$ or greater and 200 mJ/cm$^2$ or less. More preferably, the integrated light intensity is 1 mJ/cm$^2$ or greater and 100 mJ/cm$^2$ or less. Still more preferably, the integrated light intensity is 3 mJ/cm$^2$ or greater and 50 mJ/cm$^2$ or less. Most preferably, the integrated light intensity is 5 mJ/cm$^2$ or greater and 30 mJ/cm$^2$ or less. When the integrated light intensity is less than 0.5 mJ/cm$^2$, the cure shrinkage reaction proceeds slowly and an uneven shape is not sufficiently formed, resulting in the gloss being not decreased. When the integrated light intensity is greater than 200 mJ/cm$^2$, the cure shrinkage reaction proceeds so rapidly that the surface condition deteriorates.

Light at 200 nm or less can be extracted from excimer VUV light. The excimer VUV light can be produced from a noble gas or noble gas halide compound lamp. When a lamp having a noble gas or a noble gas halide compound gas sealed therein is externally provided with high energy electrons, the lamp generates a large amount of discharge plasma (dielectric barrier discharge). This plasma discharge excites atoms of the discharge gas (noble gas) and instantaneously converts them into an excimer state. When the atoms return from the excimer state to the ground state, light having a wavelength in a range specific to that excimer is emitted.

A gas used in an excimer lamp may be any conventionally used gas as long as it emits light at 200 nm or less. Examples of the gas include noble gases such as Xe, Ar and Kr, and mixed gases of noble gas and halogen gas, such as ArBr and ArF. Light from the excimer lamp has different wavelengths (center wavelengths) for different gases, such as about 172 nm (Xe), about 126 nm (Ar), about 146 nm (Kr), about 165 nm (ArBr) and about 193 nm (ArF).

However, in consideration of the magnitude of the resulting photon energy and the difference between the wavelength and the binding energy of organic matter, it is preferred to use a xenon lamp that emits excimer light with a center wavelength of 172 nm as a light source. Also in consideration of the cost of maintaining the equipment, the availability of materials, and the like, it is preferred to use a xenon lamp as a light source.

Since the first irradiation light, which is the light with a wavelength of 200 nm or less, only reaches a depth of around several tens to hundreds nanometers from the outermost surface in the acrylate, the inside of the surface protective layer 5 including the ridged portion 5B formed by irradiation with light at 200 nm or less has fluidity, which needs further curing reaction. In order to cure the surface protective layer 5 after the irradiation with light at 200 nm or less, ionizing radiation or UV light having a wavelength greater than the first irradiation light, i.e., greater than the light having a wavelength of 200 nm or less, can be used as second irradiation light.

In the present embodiment, for example, after the irradiation with the second irradiation light, irradiation may be performed with, as third irradiation light, ionizing radiation different from the second irradiation light or UV light having a wavelength greater than the wavelength of the second irradiation light. However, it is preferred that the surface protective layer 5 including the ridged portion 5B is formed only by irradiation with the two types of light, i.e., the first irradiation light and the second irradiation light. The third irradiation light may be applied when the strength of the surface protective layer 5 is not sufficient only with the irradiation with the second irradiation light.

In order to cure the entire surface protective layer 5 with the irradiation with the second irradiation light, the second irradiation light preferably has an integrated light intensity of 10 mJ/cm$^2$ or greater and 500 mJ/cm$^2$ or less. More preferably, the integrated light intensity is 50 mJ/cm$^2$ or greater and 400 mJ/cm$^2$ or less. Still more preferably, the integrated light intensity is 100 mJ/cm$^2$ or greater and 300 mJ/cm$^2$ or less. When the integrated light intensity is less than 10 mJ/cm$^2$, the curing reaction proceeds slowly, and the entire surface protective layer 5 cannot have sufficient strength, resulting in the tendency of lower scratch resistance. When the integrated light intensity is greater than 500 mJ/cm$^2$, the curing reaction proceeds so rapidly that the surface condition tends to deteriorate.

The integrated light intensity of the second irradiation light is preferably greater than the integrated light intensity of the first irradiation light. The integrated light intensity of the second irradiation light is preferably 1.1 times or more and 50.0 times or less the integrated light intensity of the first irradiation light, and more preferably 5.0 times or more and 30.0 times or less. When the integrated light intensity of the second irradiation light is less than 1.1 times the integrated light intensity of the first irradiation light, the curing reaction proceeds slowly, and the entire surface When the integrated light intensity of the second irradiation light is greater than 50.0 times the integrated light intensity of the first irradiation light, the curing reaction in the entire surface protective layer 5 proceeds so rapidly that the shape of the ridged portion 5B may be deformed.

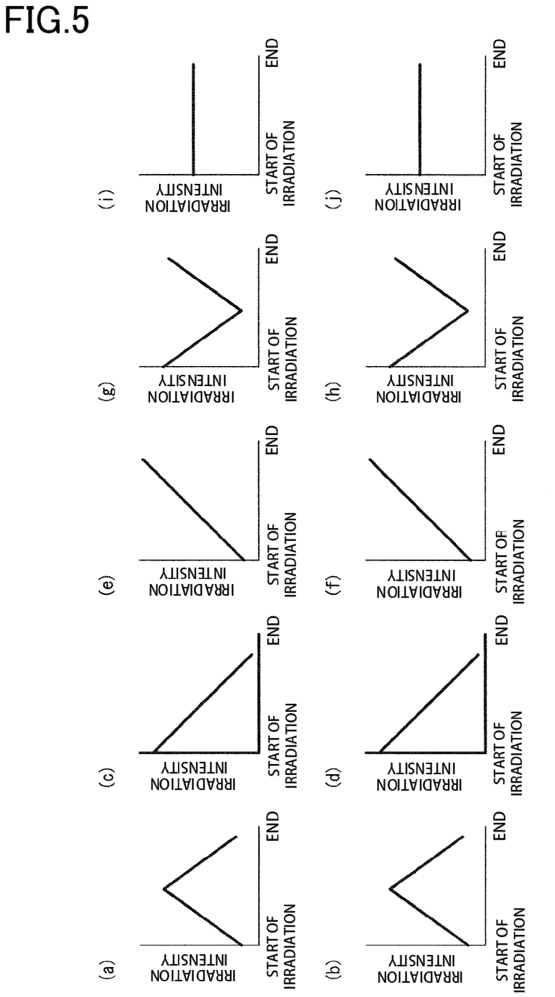

With reference to Fig. 5, changes in irradiation intensity of the first irradiation light with time and changes in irradiation intensity of the second irradiation light with time will be described.

Fig. 5 is a diagram schematically illustrating changes in irradiation intensity of the first irradiation light with time and changes in irradiation intensity of the second irradiation light with time.

Figs. 5(a), 5(c), 5(e), 5(g) and 5(i) are diagrams schematically illustrating changes in irradiation intensity of the first irradiation light with time. Figs. 5(b), 5(d), 5(f), 5(h) and 5(j) are diagrams schematically illustrating changes in irradiation intensity of the second irradiation light with time.

As shown in Fig. 5(a), the irradiation intensity of the first irradiation light may gradually increase with the lapse of irradiation time and then gradually decrease with the lapse of irradiation time. As shown in Fig. 5(c), the irradiation intensity of the first irradiation light may gradually decrease with the lapse of irradiation time. As shown in Fig. 5(e), the irradiation intensity of the first irradiation light may gradually increase with the lapse of irradiation time. As shown in Fig. 5(g), the irradiation intensity of the first irradiation light may gradually decrease with the lapse of irradiation time and then gradually increase with the lapse of irradiation time. As shown in Fig. 5(i), the irradiation intensity of the first irradiation light may be constant from the start to the end of irradiation.

As shown in Fig. 5(b), the irradiation intensity of the second irradiation light may gradually increase with the lapse of irradiation time and then gradually decrease with the lapse of irradiation time. As shown in Fig. 5(d), the irradiation intensity of the second irradiation light may gradually decrease with the lapse of irradiation time. As shown in Fig. 5(f), the irradiation intensity of the second irradiation light may gradually increase with the lapse of irradiation time. As shown in Fig. 5(h), the irradiation intensity of the second irradiation light may gradually decrease with the lapse of irradiation time and then gradually increase with the lapse of irradiation time. As shown in Fig. 5(j), the irradiation intensity of the second irradiation light may be constant from the start to the end of irradiation.

In the present embodiment, the forms of irradiation with the first irradiation light shown in Figs. 5(a), 5(c), 5(e), 5(g) and 5(i) can be appropriately combined with the forms of irradiation with the second irradiation light shown in Figs. 5(b), 5(d), 5(f), 5(h) and 5(j). For example, the form of irradiation with the first irradiation light shown in Fig. 5(a) may be combined with the form of irradiation with the second irradiation light shown in Fig. 5(f). Alternatively, the form of irradiation with the first irradiation light shown in Fig. 5(g) may be combined with the form of irradiation with the second irradiation light shown in Fig. 5(f). When RSm/Ra is set to a value in the range of 10 or greater and 300 or less, the form of irradiation with the first irradiation light shown in Fig. 5(c) is preferably combined with the form of irradiation with the second irradiation light shown in Fig. 5(f).

As described above, the ridged portion 5B formed by irradiation with light at 200 nm or less has a finer structure than the uneven shape formed by mechanical processing such as embossing on the surface of the surface protective layer 5. The fine uneven shape formed on the surface of the surface protective layer 5 can provide the decorative sheet 1 with improved fingerprint resistance while maintaining the matte appearance of the surface of the decorative sheet 1.

The surface protective layer 5 is a resin layer having a Martens hardness of 20 $N/mm^2$ or greater and 200 $N/mm^2$ or less. The Martens hardness is more preferably 50 $N/mm^2$ or greater and 150 $N/mm^2$ or less and further preferably 80 $N/mm^2$ or greater and 150 $N/mm^2$ or less. When the Martens hardness of the surface protective layer 5 is less than 20 $N/mm^2$, scratch resistance decreases, which is not preferable. When the Martens hardness of the surface protective layer 5 is greater than 200 $N/mm^2$, the sheet curls significantly due to curing shrinkage, so that lamination to a substrate material during processing becomes difficult, or the coat is hard, which causes the decorative sheet to be damaged when bonded and conveyed during processing, leading to deterioration of yield, which is not preferable. Further, since the coat is hard, the scratch resistance in a Hoffman scratch test also deteriorates, which is not preferable. Here, the above-described Martens hardness may be the Martens hardness of the ionizing radiation curable resin constituting the surface protective layer 5. That is, the Martens hardness of the ionizing radiation curable resin constituting the surface protective layer 5 is preferably 20 $N/mm^2$ or greater and 200 $N/mm^2$ or less, more preferably 50 $N/mm^2$ or greater and 150 $N/mm^2$ or less, and further preferably 80 $N/mm^2$ or greater and 150 $N/mm^2$ or less. Specifically, in a form of using, as the resin constituting the surface protective layer 5, a tetrafunctional acrylic resin that contains as a repeating structure any of an ethylene oxide structure, a propylene oxide structure, and an ε-caprolactone structure, the Martens hardness of the surface protective layer 5 is preferably 20 $N/mm^2$ or greater and 200 $N/mm^2$ or less, more preferably 50 $N/mm^2$ or greater and 150 $N/mm^2$ or less, and further preferably 80 $N/mm^2$ or greater and 150 $N/mm^2$ or less.

The value of the above-described Martens hardness can be optionally adjusted by selecting the type and molecular weight of the ionizing radiation curable resin constituting the surface protective layer 5. When the surface protective layer 5 is constituted by multiple types of resins, the value of the above-described Martens hardness can be optionally adjusted by adjusting the content ratio of the constituent resins.

When the surface protective layer 5 is formed by a plurality of layers, the Martens hardness of the top layer of the surface protective layer 5 may be in the above-described numerical value range, or the Martens hardness of the bottom layer of the surface protective layer 5 may be in the above-described numerical value range. Alternatively, the value of the Martens hardness may be gradually decreased or may be gradually increased from the top layer of the surface protective layer 5 toward the bottom layer.

The above-described Martens hardness defined in the present embodiment is a value measured by a method complying with ISO 14577. The above-described Martens hardness defined in the present embodiment is the average value of values measured at 10 locations randomly determined in the same sample.

The layer thickness of the surface protective layer 5 is preferably in a range of 2 $\mu$m or greater and 20 $\mu$m or less. More preferably, the layer thickness of the surface protective layer 5 is in a range of 3 $\mu$m or greater and 20 $\mu$m or less. Further preferably, the layer thickness of the surface protective layer 5 is in a range of 5 $\mu$m or greater and 15 $\mu$m or less. Most preferably, the layer thickness of the surface protective layer 5 is in a range of 5 $\mu$m or greater and 12 $\mu$m or less. When the layer thickness of the surface protective layer 5 is less than 2 $\mu$m, shaping by vacuum-ultraviolet light does not reach deep, which disables gloss to be lowered. When the layer thickness of the surface protective layer 5 is desired to be thicker than 20 $\mu$m, processability deteriorates, and blushing occurs during bending.

The layer thickness of the surface protective layer 5 is set such that the ratio between the layer thickness of the ridged portion 5B and the layer thickness of the core portion 5A (the layer thickness of the ridged portion 5B/the layer thickness of the core portion 5A) is preferably 0.01 or greater and 2.0 or less and more preferably 0.1 or greater and 1.0 or less.

Here, the pattern layer 3 and the surface protective layer 5 can be formed by, for example, various printing methods such as gravure printing, offset printing, screen printing, electrostatic printing, and ink-jet printing. Further, since the surface protective layer 5 covers the entire front surface of the primary film layer 2, it can also be formed by various coating methods such as roll coating, knife coating, micro gravure coating, and die coating. These printing methods or coating methods may be individually selected for each layer, or the same method may be selected for collective processing.

The pattern layer 3 and the surface protective layer 5 may be matched from the viewpoint of design properties. For matching, the surface protective layer 5 needs to be collectively formed after the formation of the pattern layer 3, and therefore gravure printing is preferably used. In addition, gravure printing is capable of relatively high-speed processing, and is preferred due to cost advantages. Matching means that 50% or more, preferably 70% or more, and most preferably 90% or more of the portion where the surface protective layer 5 is formed overlaps the pattern portion of the pattern layer 3 in plan view.

In order to adjust the thickness of the surface protective layer 5, the coating amount may be adjusted in the aforementioned printing and coating methods. The coating amount can be determined by preparing base layers (primary film layers) with a surface protective layer and without a surface protective layer in various printing and coating methods, and calculating the mass difference.

The surface protective layer 5 contains an ionizing radiation-curable resin as a main material. The main material herein refers to a material contained in an amount of 60 parts by mass or more, more preferably 70 parts by mass or more, and most preferably 80 parts by mass or more relative to 100 parts by mass of the surface protective layer. The ionizing radiation-curable resin constituting the surface protective layer 5 may be selected from known resins such as various monomers and commercially available oligomers, and examples thereof include (meth)acrylic, silicone, polyester, urethane, amide and epoxy-based resins. The ionizing radiation-curable resin may be either an aqueous resin or a non-aqueous (organic solvent-based) resin.

The main component of the ionizing radiation-curable resin constituting the surface protective layer 5 is a tetrafunctional acrylate resin having a repeating structure. Examples of the tetrafunctional acrylate resin include pentaerythritol tetraacrylate. The main component herein refers to a component contained in an amount of 60 parts by mass or more, more preferably 70 parts by mass or more, and most preferably 80 parts by mass or more relative to 100 parts by mass of the constituent resin component. Tri- or lower functional acrylate resins are not preferred due to insufficient cross-linking and lower scratch resistance. Tetra- or higher functional acrylate resins are not preferred due to excessive cross-linking and lower processability.

When gravure printing is used for coating, the ionizing radiation-curable resin has a suitable viscosity range of 10 mPa·s to 500 mPa·s and an optimal viscosity range of 50 mPa·s to 300 mPa s. To adjust viscosity, an organic solvent or a bifunctional acrylate resin with a low viscosity can be added. However, from the viewpoint of environmental impact, organic solvent is not preferred. Adding a large amount of bifunctional acrylate resin is not preferred since it reduces the scratch resistance. For this reason, when adding a bifunctional acrylate resin to a tetrafunctional acrylate resin, the bifunctional acrylate resin content is preferably in the range of 10 mass% or greater and 30 mass% or less of the tetrafunctional acrylate resin content (mass), and more preferably in the range of 15 mass% or greater and 20 mass% or less.

Further, the viscosity range of the ionizing radiation-curable resin may be 10 mPa·s to 80 mPa·s, and preferably 10 mPa·s to 50 mPa·s. When the viscosity range of the ionizing radiation-curable resin is within the above ranges, the versatility of the coating method increases.

Further, the viscosity range of the ionizing radiation-curable resin may be 200 mPa·s to 250 mPa s, and preferably 220 mPa s to 250 mPa s. When the viscosity range of the ionizing radiation-curable resin is within the above ranges, fine uneven shape can be easily formed.

The repeating structure is preferably any of an ethylene oxide (EO) structure, a propylene oxide (PO) structure and an ε-caprolactone (CL) structure. More preferably, the repeating structure is ethylene oxide or propylene oxide. The ethylene oxide structure, the propylene oxide structure, and the ε-caprolactone structure are preferred since the molecules can rotate freely and are highly flexible, and thus the molecules are easily folded when irradiated with light at 200 nm or less, whereby fine uneven shape can be easily formed. The number of repetitions of the repeating structure is 12 or greater. More preferably, the number of repetitions is 12 or greater and 50 or less, and most preferably 20 or greater and 50 or less. When the number of repetitions is 11 or less, the ionizing radiation-curable resin constituting the surface protective layer 5 does not sufficiently shrink during irradiation with vacuum ultraviolet light (VUV light) and the surface protective layer 5 does not have low gloss. When the number of repetitions is greater than 50, cross-linking density decreases, resulting in poor scratch resistance of the surface protective layer 5.

The number of repetitions of the repeating structure can be analyzed using MALDI-TOF-MS. The ionizing radiation-curable resin has a molecular weight distribution in some cases. In the molecular weight distribution of the ionizing radiation-curable resin, the number of repetitions refers to the number of repetitions of the structure corresponding to the molecular weight with the highest peak in a MALDI-TOF-MS mass spectrum.

The surface protective layer 5 may contain particles. When particles having an optimum particle diameter are added in an optimum content, a uniform surface can be formed. Usable examples of the particles include organic materials such as PE wax, PP wax, and resin beads as well as inorganic materials such as silica, glass, alumina, titania, zirconia, calcium carbonate, and barium sulfate. The average particle diameter (D50) of the particles is preferably 10 μm or less, more preferably 1 μm or greater and 8 μm or less, further preferably 2 μm or greater and 6 μm or less, and most preferably 3 μm or greater and 5 μm or less. When greater than 10 μm, particles become detached, causing deterioration of scratch resistance, which is not preferable. When less than 1 μm, the effect of uniformizing the surface is small, which is not preferable.

The added amount of the particles, with respect to 100 parts by mass of the ionizing radiation curable resin, is preferably 0.5 part by mass or greater and 10 parts by mass or less, more preferably 2 parts by mass or greater and 8 parts by mass or less, further preferably 2 parts by mass or greater and 6 parts by mass or less, and most preferably 4 parts by mass or greater and 5 parts by mass or less. When the surface protective layer 5 contains the above-described added amount of particles, a uniform surface state can be formed, which is preferable.

As described herein, the "particle diameter (average particle diameter)" may be a value (average value) obtained by particle size distribution measurement of particles used or a value obtained by actually measuring the particle diameters of a plurality of particles from the cross-sectional observation of the obtained decorative material and calculating the average value thereof. Although both measurement methods are different from each other, the obtained values of the particle diameters are substantially the same. For example, the average particle diameter of particles added to the surface protective layer 5 may be a median diameter (D50) measured using a laser diffraction/scattering particle diameter distribution measuring device.

For curing the entirety of the surface protective layer 5 with UV light, a photoinitiator needs to be added to the surface protective layer 5. The photoinitiator is not particularly limited, and examples thereof include a benzophenone-based photoinitiator, an acetophenone-based photoinitiator, a benzoin ether-based photoinitiator, and a thioxanthone-based photoinitiator.

The surface protective layer 5 can also be optionally added with functional additives such as antimicrobial agents and antifungal agents, in order to impart required functions. The surface protective layer 5 may have an ultraviolet absorbent and a photostabilizer added as necessary. It is common to add an optional combination of an ultraviolet absorbent such as a benzotriazole-based ultraviolet absorbent, a benzoate-based ultraviolet absorbent, a benzophenone-based ultraviolet absorbent, or a triazine-based absorbent and a photostabilizer such as a hindered amine-based photostabilizer.

The decorative sheet 1 thus obtained has a gloss level of 15 or less, although it does not contain a matting agent (matting additive). If a conventional decorative sheet having a surface protective layer has a gloss level of 8 or less, the surface protective layer has a high matting agent content, which makes the surface protective layer opaque. This may hinder clear expression of the colors and patterns of the colored pattern layer or deteriorate the design properties of the decorative sheet. Further, in order to produce a decorative sheet having a gloss level close to 0, it is necessary to further increase the matting agent content in the surface protective layer, and thus it is difficult to provide a surface protective layer with a smooth surface without causing streaks, unevenness, or the like.

The decorative sheet 1 can provide a decorative sheet having a gloss level of 15 or less while maintaining substantially the same performance as a decorative sheet having a gloss level of 20 or greater. The "gloss level" herein refers to a measurement determined at an incident angle of 60 degrees with a gloss meter according to JIS Z 8741.

<Concealing layer 8>

In order to provide the decorative sheet 1 with concealability from the substrate B, a colored sheet may be used as the primary film layer 2, or an opaque concealing layer 8 may be added. Although the concealing layer 8 may be basically formed from the same materials as the pattern layer 3, the pigment preferably used may be, for example, an opaque pigment, titanium oxide or iron oxide for the sake of concealability. Further, in order to increase the concealability, metals such as gold, silver, copper and aluminum may be added. Typically, aluminum flakes are added.

(Production Method)

An example of producing a decorative sheet 1 will now be described.

A resin film is used as a primary film layer 2 and a surface protective layer 5 is printed on the upper surface of the primary film layer 2. A surface protective layer 5 is formed by irradiating a surface of an applied ionizing radiation-curable resin with light having a wavelength of 200 nm or less (first irradiation light) to shrink the surface of the ionizing radiation-curable resin. Then, the shrunk ionizing radiation-curable resin is cured by irradiating it with ionizing radiation or with UV light having a wavelength greater than the first irradiation light, i.e., greater than the light having a wavelength of 200 nm or less. Thus, a decorative sheet 1 is formed that includes the surface protective layer 5 including the core portion 5A and the ridged portion 5B projecting in a ridged pattern from one surface (upper surface) of the core portion 5A.

(Advantageous Effects and Others)

The decorative sheet 1 according to the present embodiment includes the surface protective layer 5 having an uneven shape on the surface. With this configuration, the gloss (gloss level) of the surface protective layer can be adjusted without including a matting agent (matting additive) in the surface protective layer. The matting agent reduces oil repellency of layers formed of resin materials, and thus increases susceptibility to fingerprints. The surface protective layer 5 according to the present embodiment contains no matting agent, and thus has relatively high oil repellency without absorbing oil. Therefore, the decorative sheet 1 including the surface protective layer 5 is resistant to fingerprints in various situations during site operations, furniture assembly, and residents' daily living.

Moreover, according to the configuration of the surface protective layer 5 having an uneven shape on the surface, the oil repellency of the surface protective layer 5 is improved, preventing the surface of the decorative sheet 1 from being oil-stained or adsorbing contaminants.

Furthermore, according to the configuration of the surface protective layer 5 containing no matting agent, scratching the surface of the decorative sheet 1 does not lead to detachment of matting agent particles, reducing occurrence of gloss changes or scratches in the surface of the decorative sheet 1.

Further, according to the configuration of the surface protective layer 5 having a Martens hardness in a range of 20 N/mm$^2$ or greater and 200 N/mm$^2$ or less, the surface protective layer 5 itself has a certain hardness, which reduces curling of the decorative sheet 1 caused by curing shrinkage of the surface protective layer 5 and facilitates lamination to a substrate material.

Further, according to the configuration of the surface protective layer 5 having a Martens hardness in a range of 20 N/mm$^2$ or greater and 200 N/mm$^2$ or less, appropriate flexibility can be imparted to the surface protective layer 5 itself, so that the decorative sheet 1 is resistant to damage (breakage of the decorative sheet 1 is reduced).

The surface protective layer 5 was formed of one layer in the present embodiment but is not limited to such a configuration. For example, the surface protective layer 5 may have a multilayer structure. That is, the surface protective layer 5 may have an uneven shape formed on the surface by laminating multiple layers of identical ionizing radiation curable resins or laminating multiple layers of different ionizing radiation curable resins. For laminating multiple layers of different ionizing radiation curable resins, for example, the outermost surface layer of the surface protective layer 5 has a Martens hardness in a range of 20 N/mm$^2$ or greater and 200 N/mm$^2$ or less; the main material is an ionizing radiation curable resin; the ionizing radiation curable resin contains as a main component a tetrafunctional acrylic resin containing a repeating structure; the repeating structure is preferably any of an ethylene oxide structure, a propylene oxide structure, and an ε-caprolactone structure; the number of repetitions of the repeating structure is 12 or more; and a layer positioned on the primary film layer 2 side of the surface protective layer 5 (i.e., a layer positioned below the outermost layer of the surface protective layer 5) is not particularly limited.

Further, for example, the bottom layer of the surface protective layer 5 (a layer positioned on the primary film layer 2 side of the surface protective layer 5) has a Martens hardness in a range of 20 N/mm2 or greater and 200 N/mm2 or less; the main material is an ionizing radiation curable resin; the ionizing radiation curable resin contains as a main component a tetrafunctional acrylic resin containing a repeating structure; the repeating structure is preferably any of an ethylene oxide structure, a propylene oxide structure, and an ε-caprolactone structure; the number of repetitions of the repeating structure is 12 or more; and the outermost layer of the surface protective layer 5 may not be particularly limited.

[Examples]

Examples based on the present invention will be described below.

<Example 1>

On one surface of impregnated paper having a basis weight of 50 g/m$^2$ (GFR-506: manufactured by Kohjin Co., Ltd.) as a primary film layer 2, a pattern layer 3 was formed with an oily nitrocellulose resin-based gravure printing ink (various colors of PCNT (PCRNT): manufactured by Toyo Ink Co., Ltd.). Thereafter, a coating liquid for a surface protective layer described below was applied. The layer thickness of the coating liquid for a surface protective layer was 5 μm. Thereafter, the surface of the coating liquid for a surface protective layer was irradiated by an Xe excimer lamp at a wavelength of 172 nm such that the integrated light amount was 100 mJ/cm$^2$ to shrink the surface. Subsequently, the coating liquid for a surface protective layer was cured by irradiation with ionizing radiation to form a surface protective layer 5, so that a decorative sheet of Example 1 having a total thickness of 60 μm was obtained.

(Coating liquid for surface protective layer)

The coating liquid for a surface protective layer was constituted by adding particles described below to an ionizing radiation curable resin described below.

☐ Ionizing radiation curable resin

Type: ethoxylated pentaerythritol tetraacrylate (added with 35 mol of EO)
Product name: NK Ester ATM-35E (manufactured by Shin Nakamura Chemical Co., Ltd.)
Content: 100 parts by mass

☐ Particles

Product name: Sylysia 250N (manufactured by Fuji Silysia Chemical Ltd.)
Particle diameter: 5 μm
Content: 0.5 part by mass

<Example 2>

A decorative sheet of Example 2 was obtained in the same manner as in Example 1, except that the ionizing radiation curable resin of Example 1 was replaced with a resin described below.
☐ Ionizing radiation curable resin
Type: ethoxylated pentaerythritol tetraacrylate (50 mol of EO added)

<Example 3>

A decorative sheet of Example 3 was obtained in the same manner as in Example 1, except that the ionizing radiation curable resin of Example 1 was replaced with a resin described below.
☐ Ionizing radiation curable resin
Type: ethoxylated pentaerythritol tetraacrylate (20 mol of EO added)

<Example 4>

A decorative sheet of Example 4 was obtained in the same manner as in Example 1, except that the ionizing radiation curable resin of Example 1 was replaced with a resin described below.
☐ Ionizing radiation curable resin
Type: propoxylated pentaerythritol tetraacrylate (35 mol of PO added)

<Example 5>

A decorative sheet of Example 5 was obtained in the same manner as in Example 1, except that the ionizing radiation curable resin of Example 1 was replaced with a resin described below.
☐ Ionizing radiation curable resin

Type: caprolactone-modified pentaerythritol tetraacrylate (30 mol of caprolactone (CL) added)

<Example 6>

A decorative sheet of Example 6 having a total thickness of 56 μm was obtained in the same manner as in Example 1, except that the layer thickness of the coating liquid for a surface protective layer in Example 1 was changed to 1 μm.

<Example 7>

A decorative sheet of Example 7 having a total thickness of 57 μm was obtained in the same manner as in Example 1, except that the layer thickness of the coating liquid for a surface protective layer in Example 1 was changed to 2 μm.

<Example 8>

A decorative sheet of Example 8 having a total thickness of 75 μm was obtained in the same manner as in Example 1, except that the layer thickness of the coating liquid for a surface protective layer in Example 1 was changed to 20 μm.

<Example 9>

A decorative sheet of Example 9 having a total thickness of 80 μm was obtained in the same manner as in Example 1, except that the layer thickness of the coating liquid for a surface protective layer in Example 1 was changed to 25 μm.

<Example 10>

A decorative sheet of Example 10 was obtained in the same manner as in Example 9, except that the particles of Example 9 were not added.

<Example 11>

A decorative sheet of Example 11 was obtained in the same manner as in Example 3, except that the particles of Example 3 were not added.

<Example 12>

A decorative sheet of Example 12 was obtained in the same manner as in Example 1, except that the particles of Example 1 were replaced with particles described below.
□ Particles

Product name: Sylysia 450 (manufactured by Fuji Silysia Chemical Ltd.)
Particle diameter: 8.0 μm
Content: 0.5 part by mass

<Example 13>

A decorative sheet of Example 13 was obtained in the same manner as in Example 1, except that the particles of Example 1 were replaced with the following.
□ Particles

Product name: Sylysia 780 (manufactured by Fuji Silysia Chemical Ltd.)
Particle diameter: 11.3 μm
Content: 0.5 part by mass

<Example 14>

A decorative sheet of Example 14 was obtained in the same manner as in Example 1, except that the amount of the particles added in Example 1 was changed to 10 parts by mass.

<Example 15>

A decorative sheet of Example 15 was obtained in the same manner as in Example 1, except that the amount of the particles added in Example 1 was changed to 11 parts by mass.

<Example 16>

A decorative sheet of Example 16 having a total thickness of 56 $\mu$m was obtained in the same manner as in Example 1, except that the layer thickness of the coating liquid for a surface protective layer in Example 1 was changed to 1 $\mu$m, and particles were not added.

<Example 17>

A decorative sheet of Example 17 was obtained in the same manner as in Example 1, except that the ionizing radiation curable resin of Example 1 was replaced with a resin described below.
□ Ionizing radiation curable resin
Type: ethoxylated pentaerythritol tetraacrylate (added with 12 mol of EO)

<Example 18>

A decorative sheet of Example 18 having a total thickness of 80 $\mu$m was obtained in the same manner as in Example 2, except that the layer thickness of the coating liquid for a surface protective layer in Example 2 was changed to 25 $\mu$m.

<Example 19>

A decorative sheet of Example 19 was obtained in the same manner as in Example 1, except that the ionizing radiation curable resin of Example 1 was replaced with a resin described below.

□ Ionizing radiation curable resin 1 (main component)

Type: ethoxylated pentaerythritol tetraacrylate (added with 35 mol of EO)
Product name: NK Ester ATM-35E (manufactured by Shin Nakamura Chemical Co., Ltd.)
Content: 60 parts by mass

□ Ionizing radiation curable resin 2

Type: dipentaerythritol hexaacrylate
Product name: Miramer M600 (manufactured by Miwon Co., Ltd.)
Content: 40 parts by mass

<Comparative Example 1>

A decorative sheet of Comparative Example 1 was obtained in the same manner as in Example 1, except that the irradiation by an excimer lamp in Example 1 was not performed, and the amount of the particles added was changed to 15 parts by mass.

<Comparative Example 2>

A decorative sheet of Comparative Example 2 was obtained in the same manner as in Example 1, except that the ionizing radiation curable resin of Example 1 was replaced with a resin described below.
□ Ionizing radiation curable resin

Type: trimethylol propane EO-modified triacrylate (added with 6 mol of EO)
Product name: Miramer M3160 (manufactured by Miwon Co., Ltd.)

<Comparative Example 3>

A decorative sheet of Comparative Example 3 was obtained in the same manner as in Example 1, except that the ionizing radiation curable resin of Example 1 was replaced with a resin described below.
□ Ionizing radiation curable resin

Type: ethoxylated dipentaerythritol polyacrylate (added with 12 mol of EO)
Product name: NK Ester A-DPH-12E (manufactured by Shin Nakamura Chemical Co., Ltd.)

<Comparative Example 4>

A decorative sheet of Comparative Example 4 was obtained in the same manner as in Example 1, except that the ionizing radiation curable resin of Example 1 was replaced with a resin described below.
□ Ionizing radiation curable resin

Type: pentaerythritol tetraacrylate
Product name: NK Ester A-TMMT (manufactured by Shin Nakamura Chemical Co., Ltd.)

(Evaluation)

Evaluation was performed for the decorative sheets of Examples 1 to 19 and Comparative Examples 1 to 4 obtained by the above-described methods.
An evaluation of "Good" or "Fair" in the present embodiment causes no problem in actual use and was therefore considered acceptable.

<Surface state>

For a surface state, the uniformity of the surface was visually evaluated.
The evaluation criteria were as follows.

Good: uniform surface state
Fair: nonuniform portion partly present
Poor: nonuniform surface state on the entire surface

<Gloss level>

For a gloss level, the gloss level at 60 degrees was measured using a Rhopoint IQ (manufactured by Konica Minolta Inc.). In Table 1 and Table 2, this gloss level at 60 degrees was denoted as "60° gloss value".
Since the gloss level of 15 or less is visually recognized as sufficiently low gloss, "15 or less" was considered acceptable in the present examples.

<Measurement method of Martens hardness>

The measurement method of Martens hardness will be described. The Martens hardness of each decorative sheet was measured using a Martens hardness measuring device (Fischerscope HM 2000; manufactured by Fischer Instruments) which complies with ISO14577. In measuring a cross section of a sample, the measurement surface was obtained by surrounding the decorative sheet 1 with a resin such as a cold curable epoxy resin or a UV curable resin and sufficiently curing the product, and thereafter cutting the cured product such that the cross section of the decorative sheet 1 appeared, and performing mechanical polishing. The specific measurement method is pressing an indenter into the measurement surface of each sample and calculating the Martens hardness from the indentation depth and the load. The measurement conditions were a test force of 10 mN, a test force loading required time of 10 seconds, and a test force maintaining time of 5 seconds.

<Fingerprint Resistance: Evaluation of Wipe-Off Capability>

Evaluation of fingerprint wipe-off capability was performed for evaluating fingerprint resistance.

The 60-degree gloss level of the surface of each decorative sheet was measured as [initial gloss level]. Then, after a solution for evaluating fingerprint resistance was applied to the surface protective layer, the solution for evaluating fingerprint resistance on the surface of the decorative sheet was wiped off. Subsequently, the 60-degree gloss level of the area from which the solution for evaluating fingerprint resistance had been wiped off was measured as [gloss level after wiping-off]. The solution for evaluating fingerprint resistance used was a higher fatty acid.

The fingerprint wipe-off rate was calculated as follows.

$$\text{Fingerprint wipe-off rate (\%)} = (\text{gloss level after wiping-off / initial gloss level}) \times 100$$

The evaluation criteria were as follows.

Good: 70% or more and less than 250%
Fair: 50% or more and less than 70%, or 250% or more and less than 300%
Poor: Less than 50%, or 300% or more

<Contamination resistance>

Stain A test specified by Japanese Agricultural Standards (JAS) was performed as stain resistance evaluation, in which 10 mm-wide lines were respectively drawn in blue ink, quick-drying black ink and red crayon, which were then left for 4 hours. Then, the blue ink, quick-drying black ink and red crayon lines were wiped off with a cloth impregnated with ethanol to evaluate the ink stain resistance.

The evaluation criteria were as follows.

Good: All the color lines were easily wiped off.
Fair: The color lines were partially wiped off, but stains were partially left.
Poor: The color lines could not be wiped off.

<Scratch Resistance Test: Steel Wool Rubbing Test>

The obtained decorative sheet was bonded to a wooden substrate B using a urethane-based adhesive, and then subjected to a steel wool rubbing test for evaluating scratch resistance. Steel wool was caused to reciprocate 20 times at a load of 100 g, and the decorative sheet was visually examined for scratches and gloss changes occurring on the surface.

The evaluation criteria were as follows.

Good: Neither scratches nor change of gloss occurred on the surface
Fair: Slight scratches and/or change of gloss occurred on the surface
Poor: Severe scratches and/or change of gloss occurred on the surface

<Processability test: curling>

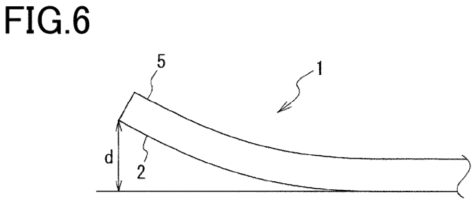

The obtained decorative sheet was cut into a 10 cm square and allowed to stand for 48 hours under conditions of 25°C and 50% RH. Then, the average of distances between the four corners of the decorative sheet and a flat surface was calculated. That is, in this curl test, the decorative sheet was placed on a surface (flat surface) of a test table as shown in Fig. 6, and a shortest distance d from the surface to each corner of the decorative sheet was measured, and then these values were averaged to evaluate the curlability of the decorative sheet. This curlability was used as an index of the ease of lamination onto the substrate materials.

The evaluation criteria were as follows.

Good: 3 cm or less
Fair: more than 3 cm and less than or equal to 5 cm
Poor: more than 5 cm

<Processability test: Wrapping (breakage)>

The obtained decorative sheet was subjected to lapping. The end of the cut decorative sheet was visually observed to evaluate breakage.

The evaluation criteria were as follows.

Good: No breakage is observed.
Fair: Breakage is partly observed.
Poor: Breakage is entirely observed.

The evaluation results are illustrated in Table 1 and Table 2.

[Table 1]

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Surface shape | | Ridged | Ridged | Ridged | Ridged | Ridged | Ridged | Ridged | Ridged | Ridged | Ridged |
| Ra ($\mu$m) | | 1.5 | 1.5 | 1.5 | 1.5 | 1 | 0.3 | 0.6 | 4.5 | 8 | 8 |
| RSm ($\mu$m) | | 180 | 150 | 300 | 180 | 300 | 90 | 120 | 360 | 400 | 400 |
| RSm/Ra | | 120 | 100 | 200 | 120 | 300 | 300 | 200 | 80 | 50 | 50 |
| Martens hardness (N/mm$^2$) | | 50 | 20 | 70 | 50 | 60 | 50 | 50 | 50 | 50 | 50 |
| Thickness ($\mu$m) | | 5 | 5 | 5 | 5 | 5 | 1 | 2 | 20 | 25 | 25 |
| Main component of ionizing radiation curable resin | Ratio (parts by mass) | 100 | 100 | 100 | 100 | 100 | 100 | 100 | 100 | 100 | 100 |
| | Number of functional groups | 4 | 4 | 4 | 4 | 4 | 4 | 4 | 4 | 4 | 4 |
| | Repeating structure — Structure | C2H4O | C2H4O | C2H4O | C3H6O | C6H10O2 | C2H4O | C2H4O | C2H4O | C2H4O | C2H4O |
| | Number of repetitions | 35 | 50 | 20 | 35 | 30 | 35 | 35 | 35 | 35 | 35 |
| Additive | Particle diameter ($\mu$m) | 5 | 5 | 5 | 5 | 5 | 5 | 5 | 5 | 5 | None |
| | Added amount (parts) | 0.5 | 0.5 | 0.5 | 0.5 | 0.5 | 0.5 | 0.5 | 0.5 | 0.5 | |
| Surface state | | Good | Good | Good | Good | Good | Fair | Good | Good | Good | Fair |
| Gloss level at 60° | | 3 | 2 | 5 | 3 | 10 | 8 | 5 | 2 | 1.5 | 3 |
| Fingerprint resistance | | Good | Good | Good | Good | Good | Good | Good | Good | Good | Good |
| Stain resistance | Stain A | Good | Good | Good | Good | Good | Good | Good | Good | Good | Good |
| Scratch resistance | Steel 300 g | Good | Good | Good | Good | Good | Fair | Good | Good | Good | Good |
| | Steel 400 g | Good | Good | Good | Good | Good | Fair | Good | Good | Good | Good |
| Processability | Curling | Good | Good | Good | Good | Good | Good | Good | Good | Good | Good |
| | Wrapping | Good | Good | Good | Good | Good | Good | Good | Good | Fair | Fair |

| | Example 11 | Example 12 | Example 13 | Example 14 | Example 15 | Example 16 | Example 17 | Example 18 | Example 19 |
|---|---|---|---|---|---|---|---|---|---|
| Surface shape | Ridged | Ridged | Ridged | Ridged | Ridged | Ridged | Ridged | Ridged | Ridged |
| Ra ($\mu$m) | 1 | 1.5 | 1.5 | 1.5 | 1.5 | 0.4 | 1.2 | 8 | 1.2 |
| RSm ($\mu$m) | 250 | 180 | 180 | 210 | 180 | 120 | 360 | 80 | 360 |
| RSm/Ra | 250 | 120 | 120 | 140 | 120 | 300 | 300 | 10 | 300 |
| Martens hardness (N/mm$^2$) | 70 | 50 | 50 | 50 | 50 | 50 | 80 | 20 | 200 |
| Thickness ($\mu$m) | 5 | 5 | 5 | 5 | 5 | 1 | 5 | 25 | 5 |
| Main component of ionizing radiation curable resin — Ratio (parts by mass) | 100 | 100 | 100 | 100 | 100 | 100 | 100 | 100 | 60 |
| Main component of ionizing radiation curable resin — Number of functional groups | 4 | 4 | 4 | 4 | 4 | 4 | 4 | 4 | 4 |
| Main component of ionizing radiation curable resin — Repeating structure — Structure | C2H4O | C2H4O | C2H4O | C2H4O | C2H4O | C2H4O | C2H4O | C2H4O | C2H4O |
| Main component of ionizing radiation curable resin — Repeating structure — Number of repetitions | 20 | 35 | 35 | 35 | 35 | 35 | 12 | 50 | 35 |
| Additive — Particle diameter ($\mu$m) | None | 8 | 11 | 5 | 5 | none | 5 | 5 | 5 |
| Additive — Added amount (parts) | - | 0.5 | 0.5 | 10 | 11 | - | 0.5 | 0.5 | 0.5 |
| Surface state | Fair | Good | Good | Good | Good | Fair | Good | Good | Fair |
| Gloss level at 60° | 7 | 3 | 3 | 3 | 3 | 10 | 10 | 1 | 10 |
| Fingerprint resistance | Good | Good | Fair | Good | Fair | Good | Good | Good | Good |
| Stain resistance — Stain A | Good | Good | Fair | Good | Fair | Good | Good | Good | Good |
| Scratch resistance — Steel 300 g | Good | Good | Fair | Good | Fair | Fair | Good | Good | Good |
| Scratch resistance — Steel 400 g | Good | Good | Fair | Good | Fair | Fair | Good | Good | Good |
| Processability — Curling | Good | Good | Good | Good | Good | Good | Good | Good | Fair |
| Processability — Wrapping | Good | Good | Fair | Good | Fair | Good | Good | Fair | Fair |

18

[Table 2]

| | | | Comparative Example 1 | Comparative Example 2 | Comparative Example 3 | Comparative Example 4 |
|---|---|---|---|---|---|---|
| Surface shape | | | Uneven by particles | Ridged | Ridged | Ridged |
| Ra ($\mu$m) | | | 0.8 | 1.5 | 1.2 | 0.5 |
| RSm ($\mu$m) | | | 320 | 150 | 360 | 2000 |
| RSm/Ra | | | 400 | 100 | 300 | 4000 |
| Martens hardness (N/mm$^2$) | | | 50 | 50 | 100 | 150 |
| Thickness ($\mu$m) | | | 5 | 5 | 5 | 5 |
| Main component of ionizing radiation curable resin | Ratio (parts by mass) | | 100 | 100 | 100 | 100 |
| | Number of functional groups | | 4 | 3 | 6 | 4 |
| | Repeating structure | Structure | C2H4O | C2H4O | C2H4O | None |
| | | Number of repetitions | 35 | 6 | 12 | 0 |
| Additive | Particle diameter ($\mu$m) | | 5 | 5 | 5 | 5 |
| | Added amount (parts) | | 15 | 0.5 | 0.5 | 0.5 |
| Surface state | | | Good | Good | Good | Good |
| Gloss level at 60° | | | 10 | 3 | 8 | 90 |
| Fingerprint resistance | | | Poor | Good | Good | Poor |
| Stain resistance | Stain A | | Poor | Good | Good | Good |
| Scratch resistance | Steel 300 g | | Poor | Poor | Good | Good |
| | Steel 400 g | | Poor | Poor | Good | Good |
| Processability | Curling | | Good | Good | Poor | Good |
| | Wrapping | | Good | Good | Poor | Good |

As shown in Table 1, the decorative sheets of Examples 1 to 19 can provide a decorative sheet which strikes a balance among fingerprint resistance, scratch resistance, contamination resistance, and processability while having a gloss of 15 or less. The performance can be further improved by optimizing, in addition to the surface shape of the surface protective layer and the resin makeup of the surface protective layer, the layer thickness of the surface protective layer and the particle diameter and amount of added particles.

[Reference Signs List]

1: Decorative sheet
2: Primary film layer
3: Pattern layer
4: Transparent resin layer
5: Surface protective layer
6: Primer layer
7: Adhesive layer
8: Concealing layer
11: Decorative material
B: Substrate

**Claims**

1.  A decorative sheet comprising a primary film layer and a surface protective layer disposed on one surface of the primary film layer, wherein

    the surface protective layer has a gloss level of 15 or less,
    the surface protective layer has on its surface a ridged portion projecting in a ridged pattern to form an uneven shape,
    the surface protective layer has a Martens hardness in a range of 20 N/mm$^2$ or greater and 200 N/mm$^2$ or less,
    the surface protective layer contains as a main material an ionizing radiation curable resin,
    the ionizing radiation curable resin contains as a main component a tetrafunctional acrylic resin containing a repeating structure,
    the number of repetitions of the repeating structure is 12 or more, and
    RSm/Ra of the uneven shape of the surface protective layer is in a range of 10 or greater and 300 or less.

2.  The decorative sheet according to claim 1, wherein
    the repeating structure is any of an ethylene oxide, propylene oxide, and ε-caprolactone structure.

3.  The decorative sheet according to claim 1 or claim 2, wherein
    the surface protective layer has a thickness in a range of 2 μm or greater and 20 μm or less.

4.  The decorative sheet according to any one of claim 1 to claim 3, wherein
    the surface protective layer contains particles having an average particle diameter of 10 μm or less.

5.  The decorative sheet according to claim 4, wherein
    the particles are added in an amount in a range of 0.5 parts by mass or more and 10 parts by mass or less relative to 100 parts by mass of the ionizing radiation-curable resin.

6.  A method of producing a decorative sheet, wherein a surface protective layer is formed having a ridged portion projecting in a ridged pattern,
    by irradiating a surface of an applied ionizing radiation curable resin with light having a wavelength of 200 nm or less and thereafter irradiating with ionizing radiation or UV light having a wavelength longer than the light having a wavelength of 200 nm or less.

7.  The method of producing a decorative sheet according to claim 6, wherein the light having a wavelength of 200 nm or less has a wavelength of 172 nm.

8.  The decorative sheet according to claim 1, wherein RSm/Ra of the uneven shape of the surface protective layer is in a range of 50 or greater and 300 or less.

9.  The decorative sheet according to claim 1, wherein RSm/Ra of the uneven shape of the surface protective layer is in a range of 100 or greater and 300 or less.

# FIG.1

# FIG.2

## FIG.3

## FIG.4

# FIG.5

# FIG.6

| | |
|---|---|
| **INTERNATIONAL SEARCH REPORT** | International application No.<br>**PCT/JP2023/013562** |

**A. CLASSIFICATION OF SUBJECT MATTER**

*B32B 27/30*(2006.01)i; *B32B 3/30*(2006.01)i; *B32B 27/00*(2006.01)i; *E04F 13/07*(2006.01)i; *E04F 13/08*(2006.01)i
FI: B32B27/30 A; E04F13/07 B; E04F13/08 A; B32B27/00 E; B32B3/30

According to International Patent Classification (IPC) or to both national classification and IPC

**B. FIELDS SEARCHED**

Minimum documentation searched (classification system followed by classification symbols)

B32B27/30; B32B3/30; B32B27/00; E04F13/07; E04F13/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2022/054645 A1 (DAINIPPON PRINTING CO LTD) 17 March 2022 (2022-03-17)<br>claims, examples, in particular, table 1, example 5 | 6-9 |
| A | | 1-5 |
| X | WO 2022/054644 A1 (DAINIPPON PRINTING CO LTD) 17 March 2022 (2022-03-17)<br>claims, examples | 6-9 |
| A | | 1-5 |
| X | JP 2021-165033 A (C.I.TAKIRON CORPORATION) 14 October 2021 (2021-10-14)<br>examples | 6-9 |
| A | | 1-5 |
| A | JP 2020-111715 A (MITSUBISHI CHEM CORP) 27 July 2020 (2020-07-27) | 1-9 |
| A | WO 2021/199556 A1 (TOPPAN INC) 07 October 2021 (2021-10-07) | 1-9 |
| A | JP 2014-46617 A (LINTEC CORP) 17 March 2014 (2014-03-17) | 1-9 |
| A | JP 2007-47722 A (NITTO DENKO CORP) 22 February 2007 (2007-02-22) | 1-9 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **18 May 2023** | **13 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

<div style="text-align:center">

**INTERNATIONAL SEARCH REPORT**
**Information on patent family members**

</div>

| | International application No. |
|---|---|
| | **PCT/JP2023/013562** |

| Patent document cited in search report | | | Publication date (day/month/year) | Patent family member(s) | | | Publication date (day/month/year) |
|---|---|---|---|---|---|---|---|
| WO | 2022/054645 | A1 | 17 March 2022 | JP | 2022-48109 | A | |
| WO | 2022/054644 | A1 | 17 March 2022 | JP | 2022-48110 | A | |
| JP | 2021-165033 | A | 14 October 2021 | WO examples | 2022/181354 | A1 | |
| JP | 2020-111715 | A | 27 July 2020 | (Family: none) | | | |
| WO | 2021/199556 | A1 | 07 October 2021 | KR | 10-2022-0145872 | A | |
| | | | | CN | 115397660 | A | |
| | | | | AU | 2021245418 | A | |
| JP | 2014-46617 | A | 17 March 2014 | (Family: none) | | | |
| JP | 2007-47722 | A | 22 February 2007 | US | 2006/0132922 | A1 | |
| | | | | KR | 10-2006-0072072 | A | |
| | | | | CN | 1794016 | A | |
| | | | | TW | 200639050 | A | |

Form PCT/ISA/210 (patent family annex) (January 2015)

**REFERENCES CITED IN THE DESCRIPTION**

**Patent documents cited in the description**

- JP 2019119138 A